# EUROPÄISCHE PATENTSCHRIFT

(11) **EP 1 334 862 B1**
(45) Veröffentlichungstag und Bekanntmachung des Hinweises auf die Patenterteilung: **29.03.2006**
(21) Anmeldenummer: 03001073.0
(22) Anmeldetag: 18.01.2003
(51) Int. Cl.: B60K 31/00, B60R 16/02, B60K 26/00

(54) **Verfahren zum Bestimmen des vom Fahrer eines Kraftfahrzeugs vorgegebenen Lastwunsches oder Bremswunsches**
Method determining drivers bake or load request
Procédé pour déterminer la demande de freinage ou de charge d'un conducteur d'un véhicule

(30) Priorität: 07.02.2002 DE 10205040
(43) Veröffentlichungstag der Anmeldung: 13.08.2003
(73) Patentinhaber: Bayerische Motoren Werke Aktiengesellschaft, 80809 München (DE)
(72) Erfinder: Prestl, Willibald Dr., 82223 Eichenau (DE)

(56) Entgegenhaltungen:
- DE-A- 19 751 306
- DE-A- 19 925 369
- DE-A- 19 951 119

## Beschreibung

Die Erfindung betrifft ein Verfahren zum Bestimmen des vom Fahrer eines Kraftfahrzeugs mittels eines Lastwunschgebers oder Bremswunschgebers, insbesondere eines Fahrpedals oder Bremspedals, vorgegebenen und geeignet aufbereitet an ein Fahrzeug-Antriebsaggregat oder eine FahrzeugBremsanlage weitergeleiteten Lastwunsches oder Bremswunsches, wobei die Aufbereitung des Lastwunsch-Signals oder Bremswunsch-Signals unter Berücksichtigung situativer Randbedingungen erfolgt. Dabei wird der Einfachheit halber in den folgenden Erläuterungen zumeist nur auf die Lastwunschvorgabe mittels eines Lastwunschgebers oder Fahrpedals eingegangen, jedoch gelten die gleichen Überlegungen für die Vorgabe eines Bremswunsches durch den Fahrer eines Kraftfahrzeugs mittels eines Bremswunschgebers, insbesondere Bremspedals.

Üblicherweise gibt in Kraftfahrzeugen der Fahrer über ein Fahrpedal (auch Gaspedal genannt) die Vorgaben für die Längsführung des Fahrzeuges hinsichtlich Beschleunigen oder Verzögern (durch das Schleppmoment oder Bremsmoment des Fzg.-Antriebsaggregats) vor. Hierbei wird typischerweise der Fahrpedalweg oder Winkel im Bereich von 0-100% mittels einer geeignet geformten Kennlinie in ein auf 0-100% normiertes Fahrerwunschmoment des Antriebsaggregats umgesetzt. Handelt es sich bei diesem bspw. um eine quantitätsgesteuerte Brennkraftmaschine, so wird das Fahrerwunschmoment durch einen normierten Drosselklappenwinkel oder einen normierten Füllungswert der Brennkraftmaschinen-Zylinder repräsentiert.

Über die Form bzw. über den Verlauf der genannten Kennlinie wird das Ansprechverhalten des Antriebsaggregats abhängig von der Fahrervorgabe definiert, wobei unterschiedliche Kennlinien vorgesehen sein können, die zu einem unterschiedlichen Ansprechverhalten führen. So ist bspw. in der DE 199 51 119 A1 ein gaffungsgemäßes Verfahren und eine Vorrichtung zur Steuerung eines Fahrzeugs vorgeschlagen, bei dem der vom Fahrer vorgegebene Lastwunsch erfasst und mittels einer vorgegebenen Zuordnung in eine Steuergröße (für das Fzg.-Antriebsaggregat) umgesetzt wird, und wobei die genannte Zuordnung vom Fahrer durch einen Einstellmechanismus verändert werden kann. Bspw. kann somit eine Kennlinie oder dgl. gewählt werden, die sich durch spontanes Ansprechen des Antriebsaggregats und somit eine entsprechende Agilität des Fahrzeugs auszeichnet, während eine andere Kennlinie oder dgl. eine gute Last-Dosierbarkeit und wenig Nervosität (hinsichtlich Auslenkbewegungen des Lastwunschgebers) ergibt.

Die genannten Kennlinien, die verallgemeinert als Signal-Aufbereitungs-Modi bezeichnet werden können, sind heute fahrzeugabhängig entweder fest definiert oder mittels vom Fahrer zu betätigender Schalter wählbar oder können fahrgeschwindigkeitsabhängig und/oder in Abhängigkeit des aktuellen Übersetzungsverhältnisses eines im Fzg.-Antriebsstrang vorgesehenen Schaltgetriebes gangabhängig definiert sein, um dem Fahrer ein günstiges Verhalten abhängig im jeweiligen Betriebspunkt zu gewähren. In dieser Auslegung der Kennlinien oder allgemein der sog. Signal-Aufbereitungs-Modi, nach denen das Lastwunschgeber-Signal umgewandelt bzw. aufbereitet wird, ehe es dem Fzg.-Antriebsaggregat zugeleitet wird, liegt generell ein Zielkonflikt zwischen dem Wunsch nach Fzg.-Agilität einerseits und guter Dosierbarkeit, Fahr-Komfort und verbrauchsgünstigem FahrBetrieb anderseits vor. Ein sportliches, agiles Ansprechen des Antriebsaggregats widerspricht bspw. einer guten Dosierbarkeit im Parkierbetrieb und führt bspw. auch zu einem nervösen Ansprechen im Kolonnenverkehr, um nur einige der vorliegenden Problemfelder zu nennen.

Die grundsätzlich bekannte geschwindigkeitsabhängige Kennlinienwahl bringt hier bereits Vorteile, jedoch wird dabei unterstellt, dass die Fzg.-Geschwindigkeit alleine bereits signifikant ist bezüglich der Adaptionswünsche des Fahrers. Dies ist jedoch nicht der Fall, da bspw. für einen dynamischen Ampelstart aus dem Fahrzeug-Stillstand heraus eine stark progressive, dynamisch-agile Kennlinie gewünscht wäre, während beim Parkieren bzw. beim Herausrangieren des Fahrzeugs aus einer Parklücke ebenfalls aus dem Fzg.-Stillstand heraus oder auch für das sog. Staukriechen eine "sanfte", gut dosierbare Kennlinie wünschenswert erscheint.

Auch in diesem Zusammenhang existiert bereits bekannter Stand der Technik, so bspw. durch die DE 197 51 306 A1. Laut dieser Schrift wird ein sog. Gebietsmerkmal für ein bestimmtes Gebiet, in welchem ein Fahrzeug fährt, nachgewiesen, und es werden sog. Fahrzeugantriebskraft-Kennlinien, wie bspw. die Drosselklappenzunahme einer elektronisch gesteuerten Drosselklappe, entsprechend dem Gebietsmerkmal modifiziert. Inhalt dieser genannten Schrift ist es weiterhin, dass während einer Betätigung des Fahrpedals dann, wenn plötzlich ein anderes "Gebiet" oder dgl. erkannt wird, keine Kennlinien-Umschaltung erfolgt, um den Fahrer nicht zu verwirren. Während das Fahrpedal betätigt wird, soll also laut diesem bekannten Stand der Technik nicht auf geänderte Randbedingungen reagiert werden.

lnsbesondere wenn eine Vielzahl unterschiedlicher Randbedingungen über unterschiedliche sog. Aufbereitungsmodi berücksichtigt werden können, ist die in der DE 197 51 306 A1 vorgeschlagene Vorgehensweise der Nichtberücksichtigung während einer Betätigung des Fahrpedals jedoch unbefriedigend. Ein dem Fahrer grundsätzlich zur Verfügung stehendes Mittel zur Verbesserung seiner Bedien-Operationen wird dann nämlich nicht genutzt.

Im Hinblick hierauf ein verbessertes Verfahren nach dem Oberbegriff des Patentanspruchs 1 aufzuzeigen, ist Aufgabe der vorliegenden Erfindung.
Die Lösung dieser Aufgabe ist dadurch gekennzeichnet, dass unterschiedlichen Fahrsituationen oder Einsatzbedingungen des Fahrzeugs unterschiedliche Signal-Aufbereitungs-Modi zugeordnet sind und dass bei einer Änderung der Randbedingungen und somit der Fahrsituation oder Einsatzbedingung zwischen den jeweiligen Modi selbsttätig eine gleitende Situationsadaption durchgeführt wird.
Vorteilhafte Weiterbildungen sind Inhalt der Unteransprüche.

Allgemein ausgedrückt liegt der vorliegenden Erfindung die Erkenntnis zugrunde, dass der Fahrer eines Fahrzeugs im ldealfall ein zur jeweiligen Fahrsituation passendes Ansprechen des Fahrzeuges (bzw. des Fzg.-Antriebsaggregats) und damit eine fahrsituationsabhängige Interpretation seiner Fahrpedalvorgaben bzw. seines am Lastwunschgeber "geäußerten" Lastwunsches erwartet. Vergleichbares kann für die Betätigung eines Bremspedals oder Bremswunschgebers gelten. Auch hierbei können bislang in Verbindung mit der Bremswunsch-Übertragung auf die Radbremsen noch nicht berücksichtigte Randbedingungen nun erfindungsgemäß zur Unterstützung des Fahrers im Hinblick auf seine Erwartung, auf eine Bremswunsch-Vorgabe hin eine situativ angepasste Verzögerung des Fahrzeugs zu erhalten, bei der Aufbereitung bzw. Übertragung des Bremswunschgeber-Signals eine Berücksichtigung finden.

Zurückkommend auf einen Lastwunschgeber bzw. das Fahrpedal, dessen Signal unterschiedlichen Fahrsituationen entsprechend unterschiedlich (d.h. nach unterschiedlichen Aufbereitungsmodi) aufbereitet werden kann, können diese unterschiedlichen Fahrsituationen können durch die folgenden tabellarisch aufgelisteten Merkmale gekennzeichnet sein, wobei gleichzeitig mögliche Sensierungsmöglichkeiten, mittels derer die jeweilige Fahrsituation erkannt werden kann, angegeben sind:

| Merkmal / situative Randbedingung | Möglichkeiten zur Sensierung |
|---|---|
| Fahrzeugbezogene Größen | |
| Geschwindigkeit | bekannte fahrzeuginterne Signale |
| Lastsituation | bekannte fahrzeuginterne Signale |
| Antriebsstrangzustand (Gang, Wandlerzustand...) | bekannte fahrzeuginterne Signale |
| Strassenbedingungen | |
| Fahrbahnreibwert | Reibwertsensorik oder interne Signalgrößen eines Schlupfregelsystems zu Schlupf oder Kraftschlussausnutzung |
| Sichtverhältnisse | Sichtweitensensorik |
| Straßenverlauf | Navigationsdatenbasen und bildverarbeitungsbasierte Spurerkennung |
| Steigung / Gefälle | Navigationsdatenbasen, Neigungssensorik |
| Straßentyp | Navigationsdatenbasen und Klassierung über bildverarbeitungsbasierte Spurerkennung sowie Trajektorienverfolgung des umgebenden Verkehrs |
| Offroadbedingungen | Navigationsdatenbasen, Längs- und Quemeigungssensoren. Aufbaubeschleunigungssensoren |
| Umgebender Verkehr | |
| - vorausfahrende Fahrzeuge | Fernbereichssensorik, Nahbereichssensorik, Kamera und Bildverarbeitung |
| - Fahrzeuge im umgebenden Verkehr | "Rundumsensorik"z.B. aus Spurwechselassistenz |
| - Verkehrsdichte | Telematik sowie Umfeldbeobachtung durch "Rundumsensorik" |
| - Parkierumfeld mit parkenden Fahrzeugen und Hindernissen | Nahbereichssensorik rundum, z.B. aus Verwendung für Einparkhilfe, Parklückenvermessung |
| Verkehrsrandbedingungen | |
| - Geschwindigkeitsbeschränkungen und sonstige verkehrsregelnde Verkehrszeichen | Video Verkehrszeichenerkennung, Navigationsdatenbasen |
| - Ampelschaltung | Video-Ampelerkennung, Telematik |

Grundsätzlich zeigt diese Tabelle, dass mittels einer zusätzlichen Sensorik und weiterer Informationsquellen, die teilweise bereits heute für Fahrer-Assistenzsysteme (wie bspw. die automatische Geschwindigkeitsregelung unter Einhaltung eines Sicherheitsabstandes zum vorausfahrenden Fahrzeug) sowie für Sicherheitssysteme in Kraftfahrzeugen Verwendung finden oder künftig immer mehr Verwendung finden werden, immer mehr Potenzial für eine spezifischere und damit aussagefähigere Fahrsituations-Erkennung gegeben ist. Damit ist es über den heutigen Stand der Technik hinaus möglich, insbesondere die sog. Pedalinterpretationskennlinien entsprechend der verfügbaren Sensorik auch wirklich fahrsituationsspezifisch zu gestalten, und zwar ohne eine detaillierte Vorgabe des Fahrers, d.h. selbsttätig.

Bezogen auf den Fall, dass der Zusammenhang zwischen einer Auslenkung des Lastwunschgebers/Fahrpedals und dem an das Fzg.-Antriebsaggregat übermittelten Lastwunsch-Signal durch eine Kennlinie, die keineswegs linear verlaufen muss, beschrieben werden kann, so können - verallgemeinert ausgedrückt - bestimmten Fahr-Situationen (S₁ - Sₙ) hierauf jeweils optimierte Kennlinien (K₁ - Kₙ) zugeordnet sein. Der Fahrer kann damit ein situationsangepasstes intelligentes Verhalten seines Fahrzeuges erleben, wobei insbesondere der Zielkonflikt "Agilität versus Komfort und Dosierbar keit" wirkungsvoll aufgelöst werden kann. Dabei sei nochmals darauf hingewiesen, dass der der Zusammenhang zwischen einer Auslenkung des Last- oder Bremswunschgebers (d.h. des Fahrpedals oder Bremspedals) und dem an das Fzg.-Antriebsaggregat bzw. an die Fzg.-Bremsanlage übermittelten Last- oder Bremswunsch-Signal keineswegs nur durch eine Kennlinie, sondern allgemein durch eine beliebige Zuordnung beschrieben sein kann, für die hier auch der Begriff "Signalaufbereitungsmodus" verwendet wird.

Wenn nun eine Adaption bzw. situationsgerechte oder randbedingungsspezifische Signal-Aufbereitung bezüglich einer Vielzahl unterschiedlicher Fahr-Situationen oder Randbedingungen vorgenommen werden soll, so soll erfindungsgemäß bei einem Wechsel der Randbedingungen und somit bei einem Wechsel des aktuell passenden Signalaufbereitungsmodus diese sog. Situationsadaption gleitend erfolgen, um Unstetigkeiten und ein sprunghaftes Wechseln der sog. Pedal-Charakteristik (oder dgl.) zu vermeiden. Beispielsweise soll kein schlagartiger Übergang zwischen einem sog. Parkiermodus, mit welchem das Fahrzeug aus einer Parklücke heraus bewegt wird, und einem sog. Stadtverkehr-Modus, mit welchem das Fahrzeug anschließend im fließenden Stadtverkehr bewegt wird, erfolgen. Vielmehr soll erfindungsgemäß der Übergang zwischen diesen beiden Modi gleitend erfolgen. Dies kann bspw. mittels einer geeigneten Übergangs-Funktion geschehen.

Wenn nun unterschiedliche Signalaufbereitungs-Modi für eine Vielzahl unterschiedlicher Randbedingungen vorgesehen sind, so kann es durchaus der Fall sein, dass mehrere derartiger Randbedingungen gleichzeitig bzw. nebeneinander zu berücksichtigen sind. Beispielsweise sei neben dem bereits genannten Parkiermodus und dem bereits genannten Stadtverkehr-Modus noch ein spezieller Signalaufbereitungsmodus für eisglatte Fahrbahn und ein weiterer Signalaufbereitungsmodus für das Befahren einer Steigungs- oder Gefällestrecke vorgesehen. Wenn nun das Fahrzeug aus einer auf einer Gefällestrecke liegenden Parklücke herausrangiert werden soll und gleichzeitig die Fahrbahn vereist ist, so können zumindest theoretisch sämtliche in diesem Absatz genannten Modi nebeneinander bzw. parallel zueinander benötigt werden.

Um nun derartige Anwendungsfälle regelungstechnisch einfach in den Griff zu bekommen, wird weiterhin vorgeschlagen, für alle in Frage kommenden Situationen laufend Situationswahrscheinlichkeiten (p₁ - pₙ) (bspw. jeweils von 0-100%) zu berechnen, die ein Maß dafür sind, welche Situation gerade vorliegt. Eine aktuell anzuwendende Kennlinie kann dann bspw. durch über die genannten Wahrscheinlichkeiten gewichtete Mittelwerte der jeweiligen Signalaufbereitungsmodi (bspw. Kennlinien) ermittelt werden.

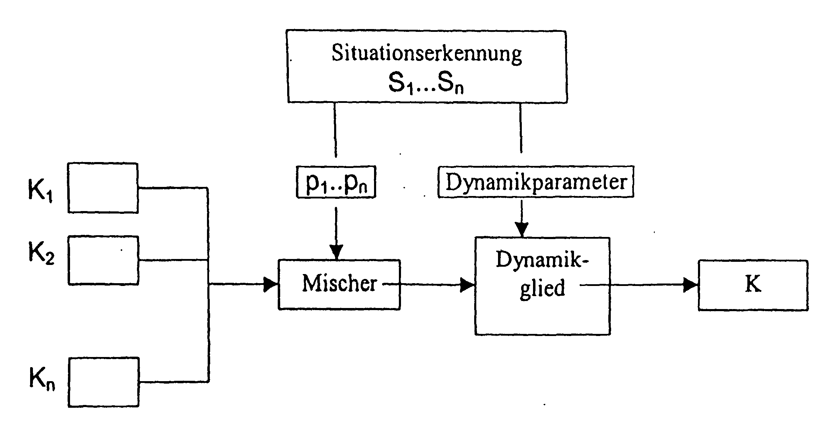

In der beigefügten einzigen Figur ist ein entsprechendes Verfahren schematisch dargestellt. Die möglichen Fahr-Situationen (S₁ - Sₙ) werden demnach in Rahmen einer Situationserkennung mit den genannten Wahrscheinlichkeiten (p₁ - pₙ) gewichtet und danach einem Mischer zugeführt, dem weiterhin die zugehörigen Kennlinien (K₁ - Kₙ) zur Verfügung gestellt werden.

Bevorzugt wird nun der Übergang zwischen den einzelnen Situationen abhängig von der Art des Situationswechsels über ein Dynamikglied, z.B. einem Filterelement mit einstellbarer Zeitkonstante, so gestaltet, dass der Fahrer nicht von der Änderung der Charakteristik überrascht wird und sich intuitiv an die neuen Gegebenheiten anpassen kann. Dies ist insbesondere der Fall, wenn z.B. Kennlinienänderungen bei konstant gehaltenem Fahrpedal zu einer Beschleunigung des Fahrzeugs führen würden. Hierbei ist durch langsame Dynamik dafür zu sorgen, dass die zusätzliche Regelaufgabe, die für den Fahrer hieraus resultiert, im Rahmen der ohnehin ständig erforderlichen Feinregulierung durch den Fahrer untergehen. Mit Durchführung dieses geschilderten Prozesses ergibt sich somuit ein sog. Summen-Aufbereitungsmodus für das Pedal-Signal (Lastwunschgeber Signal oder Bremswunschgeber-Signal), der in der beigefügten Figur mit dem Buchstaben "K" bezeichnet ist.

Um eine Funktionstransparenz für den Fahrer des Kraftfahrzeugs zu gewährleisten, kann im Rahmen einer vorteilhaften Weiterbildung der Erfindung der jeweils aktuelle Signalaufbereitungsmodus, nach welchem die Signalaufbereitung zwischen dem Lastwunschgeber und dem Fzg.-Antriebsaggregat erfolgt (d.h. bspw. die jeweils aktuelle Kennlinie aus dem Umfang der grundsätzlich möglichen Kennlinien oder allgemein Signalaufbereitungsmodi) dem Fahrer bspw. durch Anzeigeumfänge kenntlich gemacht werden. Bspw. kann dem Fahrer geeignet mitgeteilt werden, dass aktuell ein sog. Parfcier-Modus aktiv ist, oder dass nach Verlassen der Parklücke ein sog. Stadtverkehr-Modus aktiv ist, oder dass bei einer Fahrt auf der Autobahn ein sog. Autobahn-Modus aktiv ist. Wenn allerdings nur zwischen wenigen, ganz elementaren Situationen (bspw. Fahren und Parkieren) gewechselt werden kann, die für den Fahrer eindeutig oder im Zusammenhang mit anderen Assistenzfunktionen (z.B. eingeschaltete Parkierhilfe) zuordenbar sind, so ist eine eigenständige Kenntlichmachung nicht erforderlich. Hingegen kann es bei einer Vielzahl von möglichen Aufbereitungsmodi empfehlenswert sein, dem Fahrer nicht nur ausgewählte, im wesentliche aktuell aktive Aufbereitungsmodi anzuzeigen, sondern den o.g. in der beigefügten Figur mit dem Buchstaben "K" bezeichneten) Summen-Aufbereitungsmodus.

Über die beschriebene Veränderung der Fahrpedalkennlinien als Signalaufbereitungsmodi hinaus besteht die im folgenden erläuterte weitere Möglichkeit, die grundlegende Art der Fahrpedalinterpretation situationsbezogen zu verändern. Heute ergibt sich nämlich über die sog. Pedal-Kennlinie und die letztlich daraus resultierende Momentenanforderung des Fahrers an das Fzg.-Antriebsaggregat abhängig vom Antriebsstrangzustand des Fahrzeugs und den aktuellen Fahrwiederständen mittelbar eine bestimmte, aber von diesen Randbedingungen abhängige Fahrzeugreaktion. Beispiele hierfür sind etwa das steigungsabhängig unterschiedliche Verhalten eines Fahrzeuges mit Automatikgetriebe.

Auf Basis einer dem Fahrpedalwinkel zugeordneten Regelfunktion, z.B. als Bestandteil eines Längsdynamikmanagements, kann nun jedoch der Pedalwertvorgabe eine eindeutige Reaktion des Fahrzeuges zugeordnet werden, z.B. eine Fahr-Geschwindigkeit abhängig vom Pedalwinkel oder eine Beschleunigung und/oder Verzögerung abhängig vom Pedalwinkel. Unter Einbeziehung der Betriebsbremsanlage des Fahrzeugs wird damit der mit dem Fahrpedal erreichbare Wirkbereich erweitert. Grundsätzlich sind derartige Ansätze bekannt, wobei erfindungsgemäß der Übergang in derartige Signalaufbereitungsmodi und die zugehörige Auswahl jeweils zutreffender Kennlinien oder dgl. (bspw: Geschwindigkeit oder Beschleunigung ist eine Funktion des Auslenkwinkels des Fahrpedals bzw. Lastwunschgebers) unter Nutzung der oben vorgeschlagenen Situationserkennungen fahrsituationsbezogen erfolgen kann.

Als ein Beispiel hierfür kann die direkte Vorgabe einer Parkiergeschwindigkeit bevorzugt steigungsunabhängig in Parkiersituationen inclusive einem Halten des Fahrzeuges bei Loslassen des Fahrpedals genannt werden. Ein weiteres Beispiel ist das sog. "bremsende Fahrpedal", wobei durch eine pedalwertproportionale Beschleunigung mit Nullpunktoffset auch eine Verzögerungsfunktion des Fahrzeugs durch Pedalloslassen als Funktion in einem selbständig erkannten "Stau-Kriechmodus" umgesetzt werden kann. Dem Fahrer wird hiermit erspart, im Stau-Kolonnenverkehr dauernd zwischen dem Gas- oder Fahrpedal und einem Bremspedal hin- und herzuwechseln.

Grundsätzlich ermöglicht die vorliegende Erfindung die Auflösung von Zielkonflikten zwischen der Agilität eines Kraftfahrzeugs und dem Komfort bzw. der Bedienbarkeit im Hinblick auf den mittels eines Lastwunschgebers erzeugten und als geeignet aufbereitetes Signal an das Fzg.-Antriebsaggregat übermittelten Lastwunsch des Fzg.-Fahrers. Daraus ergibt sich direkt eine Erhöhung der Souveränität des Fahrers in der Fahrzeugführung. Ferner ermöglicht die vorliegende . Erfindung eine Darstellung dieser Zusatzfunktionalitäten auf kostengünstige Art im Umfeld wachsender Fahrersassistenzfunktionen und deren Sensorik sowie auf Basis eines leistungsfähigen Längsdynamikmanagements. Dabei kann ein erfindungsgemäßes Verfahren auf dem Fachmann bekannte Weise in elektronischen Steuereinheiten umgesetzt werden, wobei ausdrücklich auch für derartige Vorrichtungen zur Durchführung eines erfindungsgemäßen Verfahrens Schutz beansprucht wird. Schließlich sei noch darauf hingewiesen, dass durchaus eine Vielzahl von Details auch abweichend von obigen Erläuterungen gestaltet sein kann, ohne den Inhalt der Patentansprüche zu verlassen. Insbesondere kann dieses Verfahren - unabhängig von der auf einen Lastwunschgeber bzw. ein Fahrpedal eines Kraftfahrzeugs ausgerichteten Schilderung - auch bezüglich eines Bremswunschgebers oder Bremspedals eines Kraftfahrzeugs angewendet werden.

## Patentansprüche

1. Verfahren zum Bestimmen des vom Fahrer eines Kraftfahrzeugs mittels eines Lastwunschgebers oder Bremswunschgebers, insbesondere eines Fahrpedals oder Bremspedals vorgegebenen und geeignet aufbereitet an ein Fahrzeug-Antriebsaggregat oder eine FahrzeugBremsanlage weitergeleiteten Lastwunsches oder Bremswunsches, wobei die Aufbereitung des Lastwunsch-Signals oder Bremswunsch-Signals unter Berücksichtigung situativer Randbedingungen erfolgt,
**dadurch gekennzeichnet, dass** unterschiedlichen Fahrsituationen oder Einsatzbedingungen des Fahrzeugs unterschiedliche Signal-Aufbereitungs-Modi zugeordnet sind und dass bei einer Änderung der Randbedingungen und somit der Fahrsituation oder Einsatzbedingung zwischen den jeweiligen Modi selbsttätig eine gleitende Situationsadaption durchgeführt wird.

2. Verfahren nach Anspruch 1,
**dadurch gekennzeichnet, dass** für die in Frage kommenden Fahrsituationen Situationswahrscheinlichkeiten bestimmt werden, mit denen die zugehörigen Aufbereitungs-Modi gewichtet werden, so dass hieraus ein situativer Summen-Aufbereitungsmodus gewonnen werden kann.

3. Verfahren nach Anspruch 1 oder 2,
**dadurch gekennzeichnet, dass** ein Dynamikglied im zugehörigen Regelsystem, insbesondere in Form eines Filterelements mit einstellbarer Zeitkonstante, für einen gleitenden Übergang zwischen verschiedenen Fahrsituationen sorgt.

4. Verfahren nach einem der vorangegangenen Ansprüche,
**dadurch gekennzeichnet, dass** die Aufbereitungs-Modi zumindest in gewissen Fahrsituationen in Form von Kennlinien gestaltet sind.

5. Verfahren nach einem der vorangegangenen Ansprüche,
**dadurch gekennzeichnet, dass** die Aufbereitungs-Modi in gewissen Fahrsituationen derart gestaltet sind, dass die Lastwunschgeber-Signale und/oder Bremswunschgeber-Signale konkreten Geschwindigkeiten oder positiven und/oder negativen Beschleunigungen des Fahrzeugs entsprechen.

6. Verfahren nach einem der vorangegangenen Ansprüche,
**dadurch gekennzeichnet, dass** nur ausgewählte, im wesentliche aktuell aktive Aufbereitungsmodi oder der situative Summen-Aufbereitungsmodus dem Fahrer des Fahrzeugs kenntlich gemacht wird/werden.

7. Vorrichtung zur Durchführung des Verfahrens nach einem der vorangegangenen Ansprüche.

## Claims

1. A method of determining a driver's load request or brake request transmitted to a vehicle drive unit or vehicle brake unit after being preset by a load request transmitter or brake request transmitter, especially an accelerator pedal or brake pedal, and suitably processed, wherein the load request signal or brake request signal is processed so as to allow for situational boundary conditions, **characterised in that** different driving situations or operating conditions of the vehicle are associated with different signal processing modes and in the event of a change in the boundary conditions and consequently in the driving situation or operating conditions, a smooth adaptation to the situation is automatically made between the respective modes.

2. A method according to claim 1, **characterised in that** in the case of the driving situations in question, situation probabilities are determined for the purpose of weighting the associated processing modes, so that a cumulative situational processing mode can be obtained.

3. A method according to claim 1 or 2, **characterised in that** a dynamic element in the associated control system, especially in the form of a filter element with an adjustable time constant, is used for making a smooth transition between different driving situations.

4. A method according to any of the preceding claims, **characterised in that** the processing modes are in the form of characteristic curves, at least in certain driving situations.

5. A method according to any of the preceding claims, **characterised in that** in certain driving situations the processing modes are organised so that the load request transmitter signals and/or brake request transmitter signals are associated with specific speeds or positive and/or negative accelerations of the vehicle.

6. A method according to any of the preceding claims, **characterised in that** only selected processing modes, basically currently active or situational cumulative, are made identifiable by the driver.

7. A device for working the method according to any of the preceding claims.

## Revendications

1. Procédé pour déterminer une demande de charge ou de freinage prédéterminée par le conducteur d'un véhicule automobile au moyen d'un détecteur de demande de charge ou de freinage, en particulier d'une pédale d'accélérateur ou de freinage, et transmise après un traitement approprié à un groupe d'entraînement ou un système de freinage du véhicule, le traitement du signal de demande de charge ou de freinage s'effectuant en tenant compte de conditions marginales en fonction de la situation,
**caractérisé en ce qu'**
on associe des modes de traitement de signaux différents à des situations de conduite ou conditions d'utilisation différentes du véhicule, et lors d'un changement des conditions marginales et ainsi de la situation de conduite ou de la condition d'utilisation on effectue une adaptation glissante à la situation automatiquement entre les modes respectifs.

2. Procédé selon la revendication 1,
**caractérisé en ce que**
pour les situations de conduite en question, on détermine des probabilités de situation par lesquelles les modes de traitement associés sont pondérés pour ainsi obtenir un mode de traitement global en fonction de la situation.

3. Procédé selon la revendication 1 ou 2,
**caractérisé en ce qu'**
un organe dynamique dans le système de régulation associé, en particulier sous forme d'un élément filtrant avec constante de temps réglable, assure un passage glissant entre différentes situations de conduite.

4. Procédé selon l'une quelconque des revendications précédentes,
**caractérisé en ce qu'**
au moins dans certaines situations de conduite les modes de traitement présentent la forme de courbes caractéristiques.

5. Procédé selon l'une quelconque des revendications précédentes,
**caractérisé en ce que**
dans certaines situations de conduite les modes de traitement sont configurés de sorte que les signaux du détecteur de demande de charge et/ou les signaux du détecteur de demande de freinage correspondent à des vitesses concrètes ou à des accélérations positives et/ou négatives du véhicule.

6. Procédé selon l'une quelconque des revendications précédentes,
**caractérisé en ce qu'**
on signale au conducteur du véhicule uniquement des modes de traitement sélectionnés pour l'essentiel actuellement actifs ou le mode de traitement global en fonction de la situation.

7. Dispositif pour la mise en oeuvre du procédé selon l'une quelconque des revendications précédentes.
